# EUROPÄISCHE PATENTSCHRIFT

(11) **EP 3 109 499 B1**
(45) Veröffentlichungstag und Bekanntmachung des Hinweises auf die Patenterteilung: **25.12.2019**
(21) Anmeldenummer: 15001864.6
(22) Anmeldetag: 23.06.2015
(51) Int. Cl.: F16D 65/18

(54) **SCHEIBENBREMSE, INSBESONDERE FÜR NUTZFAHRZEUGE**
DISC BRAKE, IN PARTICULAR FOR A COMMERCIAL VEHICLE
FREIN A DISQUE, EN PARTICULIER POUR VEHICULES UTILITAIRES

(43) Veröffentlichungstag der Anmeldung: 28.12.2016
(73) Patentinhaber: WABCO Europe BVBA, 1170 Brussels (BE)
(72) Erfinder: Jungmann, Hans-Christian, 69517 Gorxheimertal (DE); Moser, Peter, 74915 Waibstadt (DE); Scherer, Vitalij, 68229 Mannheim (DE); Grosskopf, Ralf, 68229 Mannheim (DE)
(74) Vertreter: Leinweber & Zimmermann

(56) Entgegenhaltungen:
- EP-A1- 0 569 031
- EP-A1- 3 048 324
- EP-A2- 1 160 477
- WO-A1-96/12900
- WO-A1-2015/040652
- CN-A- 102 242 786
- DE-A1-102009 023 416

## Beschreibung

Die Erfindung betrifft eine Scheibenbremse, insbesondere für Nutzfahrzeuge nach dem Oberbegriff von Anspruch 1 (EP 1 160 447).

Ähnliche Scheibenbremsen sind beispielsweise aus der CN 102 242 786 A und der DE 10 2010 005 909 A1 bekannt. Danach sind sogenannte Führungsleisten vorgesehen, die die Verschieblichkeit sowohl des Druckstücks als auch der Bremswelle bezüglich der Bremsscheibe in Richtung parallel zur Drehachse der Bremswelle auf ein vorbestimmtes Maß beschränken. Das vorbestimmte Maß liegt dabei bei Null bzw. nahe Null, weil die Führungsleisten - entsprechend ihrer Bezeichnung - das Druckstück bzw. die Bremswelle in Axialrichtung beim Bremsen bzw. Zuspannen der Bremsen führen sollen, gleichzeitig aber gewährleistet sein muss, dass die genannten Bauteile sich nicht verklemmen.

Bei den bekannten Scheibenbremsen liegt derjenige Teil der Führungsleisten, der die Verschieblichkeit der Bremswelle beschränken soll, tief im Inneren des Bremssattels, weshalb eine präzise Bearbeitung zur Sicherstellung der einwandfreien Funktion schwierig ist. Darüber hinaus wirkt eine Verformung der beteiligten Bremsenteile, insbesondere des Bremssattels, infolge der Zuspannung beim Bremsen im Sinne einer Verkleinerung des Spiels zwischen insbesondere der Bremswelle und dem einschlägigen Abschnitt der Führungsleiste, was zu einem Verklemmen führen kann.

Der Erfindung liegt die Aufgabe zugrunde, die Scheibenbremse der eingangs genannten Art derart zu verbessern, dass zum einen die Herstellung vereinfacht ist und zum anderen ein Verklemmen infolge Verformungen beim Zuspannen vermieden ist.

Erfindungsgemäß wird die gestellte Aufgabe mit einer Scheibenbremse nach Anspruch 1 gelöst.

Mit anderen Worten wird die zweite Beschränkungseinrichtung, also diejenige Beschränkungseinrichtung, die die Verschieblichkeit der Bremswelle auf das vorbestimmte zweite Maß beschränkt, dadurch realisiert, dass die Verschieblichkeit der Bremswelle bezüglich des Druckstücks beschränkt wird. Die Beschränkungseinrichtung für das Druckstück kann dabei wie herkömmlich ausgestaltet sein. Mit anderen Worten wird die Verschieblichkeit des Druckstücks beschränkt, und die Bremswelle wird derart mit dem Druckstück gekoppelt, dass diese Verschieblichkeit nicht etwa absolut, sondern nur bezüglich des Druckstücks beschränkt ist. Im Ergebnis wird die gewünschte Verschieblichkeitsbeschränkung für beide Elemente, also sowohl für das Druckstück als auch für die Bremswelle erzielt, ohne dass beispielsweise im Inneren eines Bremssattels Führungsleisten für die Bremswelle vorgesehen werden müssten.

Dadurch, dass die Führungsleisten für die Bremswelle entbehrlich sind, ist der Herstellungsaufwand verringert. Darüber hinaus besteht nicht die Gefahr des Verklemmens mit den genannten Führungsleisten. Im Gegenteil: Die Anschläge (erster Anschlag an dem Druckstück und zweiter Anschlag an der Bremswelle) werden sich wegen der gegebenen Geometrien infolge von Verformungen während des Zuspannens der Bremse im Sinne einer Spielvergrößerung verschieben, so dass ein Verklemmen zuverlässig ausgeschlossen ist.

Aus der EP 1 789 695 B1 ist eine Scheibenbremse bekannt, bei der nicht wie nach der vorliegenden Erfindung das Druckstück die Bremswelle hält, sondern umgekehrt die Bremswelle das Druckstück. Auch diese bekannte Scheibenbremse bringt die oben beschriebenen Probleme hinsichtlich des Herstellungsaufwands und hinsichtlich der Verklemmsicherheit mit sich.

Dabei kann erfindungsgemäß vorgesehen sein, dass der erste Anschlag außerhalb desjenigen Bereichs liegt, in den beim Bremsen eine von der Bremswelle ausgehende Zuspannkraft in das Druckstück eingeleitet wird. Diese Ausgestaltung hat erhebliche mechanische Vorteile.

Erfindungsgemäß bevorzugt ist vorgesehen, dass die zweite Beschränkungseinrichtung einen, zwei oder mehr Ansätze an dem Druckstück aufweist. An einem solchen Ansatz (oder an mehreren Ansätzen) kann dann der erste Anschlag ausgebildet werden, mit dem der zweite Anschlag im Sinne eines Beschränkens der Verschieblichkeit der Bremswelle zusammenwirkt.

Selbstverständlich kann im Sinne einer mechanischen Umkehr ein solcher Ansatz (oder auch zwei oder mehrere) an der Bremswelle ausgebildet sein, um den zweiten Anschlag zu realisieren.

Im Falle von zwei Ansätzen kann es erfindungsgemäß vorgesehen sein, dass der Abstand der beiden Ansätze voneinander größer ist als der Abstand der in Richtung parallel zur Drehachse der Bremswelle gemessene Abstand der äußeren Ränder desjenigen Bereichs, in dem beim Bremsen eine von der Bremswelle ausgehende Zuspannkraft in das Druckstück eingeleitet wird.

Mit anderen Worten liegen bei dieser Ausgestaltung der Erfindung die beiden Ansätze mit dem jeweiligen Anschlag weiter auseinander, als der Krafteinleitungsbereich breit ist. Wiederum werden mechanische Vorteile erzielt.

Die erfindungsgemäße Scheibenbremse weist bevorzugt einen Bremssattel, insbesondere einen Gleitsattel auf. Mit anderen Worten handelt es sich bevorzugt um eine Gleitsattelscheibenbremse.

Die Bremswelle stützt sich erfindungsgemäß bei Betätigung an dem Bremssattel ab, insbesondere an dessen Rückwand. Dadurch kann die Zuspannkraft auf einen auf der Felgenseite der Bremsscheibe gelegenen weiteren Bremsbelag übertragen werden.

Die Abstützung der Bremswelle an dem Bremssattel erfolgt über einen Gleitstein. Ein solcher Gleitstein kann gegebenenfalls durch entsprechendes Gleiten ein Verklemmen der an der Zuspannung der Bremse beteiligten Elemente vermeiden.

Erfindungsgemäß ist eine dritte Beschränkungseinrichtung vorgesehen, die die Verschieblichkeit des Gleitsteins bezüglich der Bremsscheibe in mindestens einer parallel zur Hauptebene der Bremsscheibe liegenden Richtung auf ein vorbestimmtes drittes Maß beschränkt. Eine solche Beschränkungseinrichtung kann insbesondere bei der Montage der Bremse hilfreich sein, nämlich beispielsweise als Verliersicherung für den Gleitstein.

Dabei ist es erfindungsgemäß vorgesehen , dass die dritte Beschränkungseinrichtung einen Vorsprung aufweist, der in montiertem Zustand in eine Ausnehmung hineinragt.

Dabei gibt es wiederum zwei Möglichkeiten: Der Vorsprung kann an dem Gleitstein ausgebildet sein, während die Ausnehmung an dem Bremssattel ausgebildet ist. Selbstverständlich geht es auch umgekehrt mit einer Ausnehmung an dem Gleitstein und einem Vorsprung an dem Bremssattel.

Das vorbestimmte dritte Maß ist dabei wiederum derart zu wählen, dass nötigenfalls ausreichend Spiel für Ausgleichs-Gleitbewegungen vorhanden ist.

Bei der Ausnehmung handelt es sich erfindungsgemäß um ein Sackloch.

Im Folgenden ist die Erfindung anhand eines bevorzugten Ausführungsbeispiels unter Bezugnahme auf die beiliegende Zeichnung mit weiteren Einzelheiten näher erläutert. Dabei zeigen
- Figur 1: eine schematische Schnittansicht eines bevorzugten Ausführungsbeispiels der erfindungsgemäßen Scheibenbremse von oben,

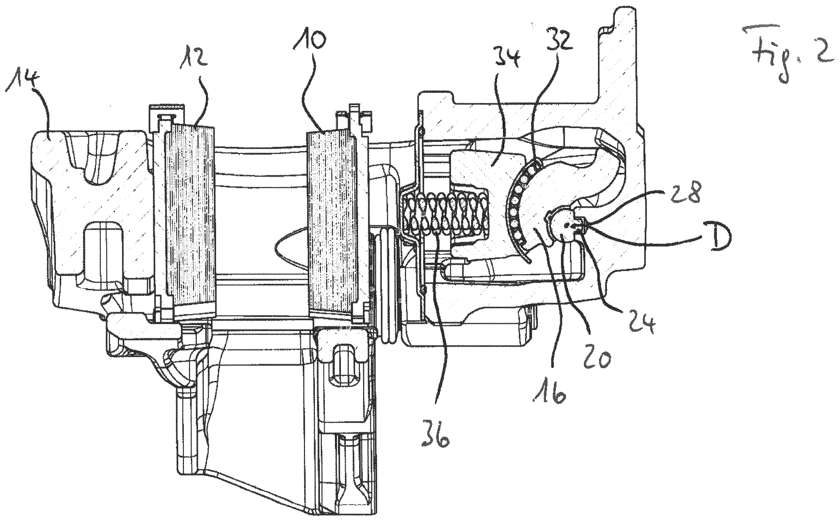

- Figur 2: eine schematische Schnittansicht der Scheibenbremse nach Figur 1 von der Seite,

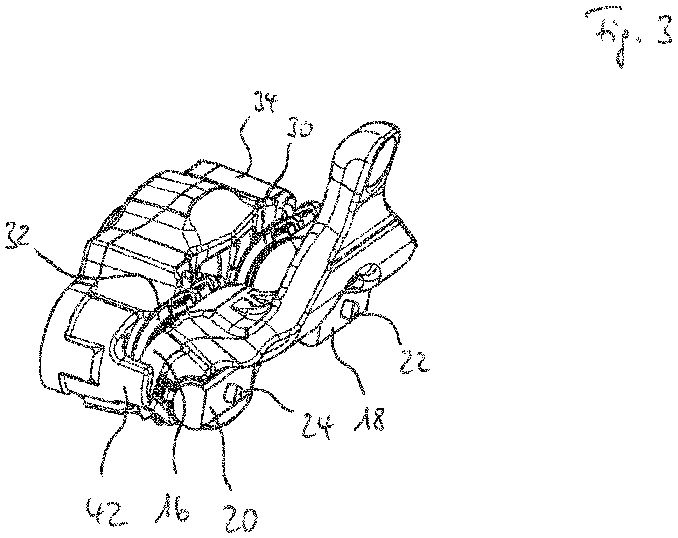

- Figur 3: eine schematische perspektivische Ansicht der Zuspanneinrichtung der Scheibenbremse nach Figur 1 und

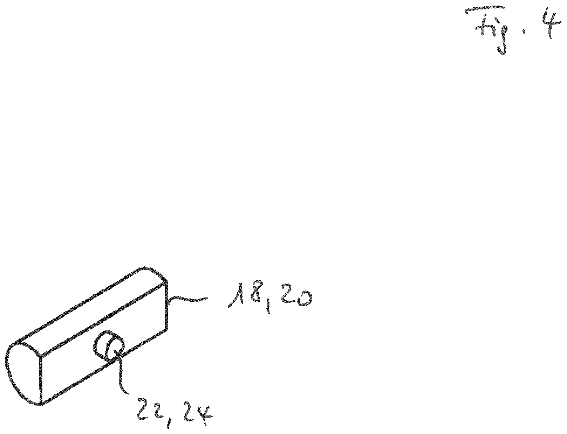

- Figur 4: eine schematische perspektivische Ansicht eines Gleitsteins der Scheibenbremse nach Figur 1.

Zu der in der Zeichnung dargestellten Scheibenbremse gehören ein zuspannseitiger Bremsbelag 10 und ein felgenseitiger Bremsbelag 12, die auf einander gegenüberliegenden Seiten einer nicht in der Zeichnung dargestellten Bremsscheibe liegen. Die Hauptebene der Bremsscheibe ist jedoch eingezeichnet und mit dem Bezugszeichen E versehen. Ferner gehört zu der Scheibenbremse ein Bremssattel 14, bei dem es sich um einen Gleitsattel handelt. Eine zu einer Zuspanneinrichtung gehörende Bremswelle ist mit der Bezugszahl 16 bezeichnet. Ihre Drehachse trägt das Bezugszeichen D. Auf der dem zuspannseitigen Bremsbelag 10 abgewandten Seite stützt sich die Bremswelle 16 über Gleitsteine 18, 20 an dem Bremssattel 14 ab. Die Gleitsteine weisen jeweils einen Vorsprung 22, 24 auf, der in einem Sackloch 26 bzw. 28 steckt.

Auf der dem zuspannseitigen Bremsbelag 10 zugewandten Seite stützt sich die Bremswelle 16 über Drehlager 30, 32 an einem Druckstück 34 ab. Das Druckstück 34 stützt sich über eine Nachstellschraube 36 und einen Druckstempel 38 an dem zuspannseitigen Bremsbelag 10 ab.

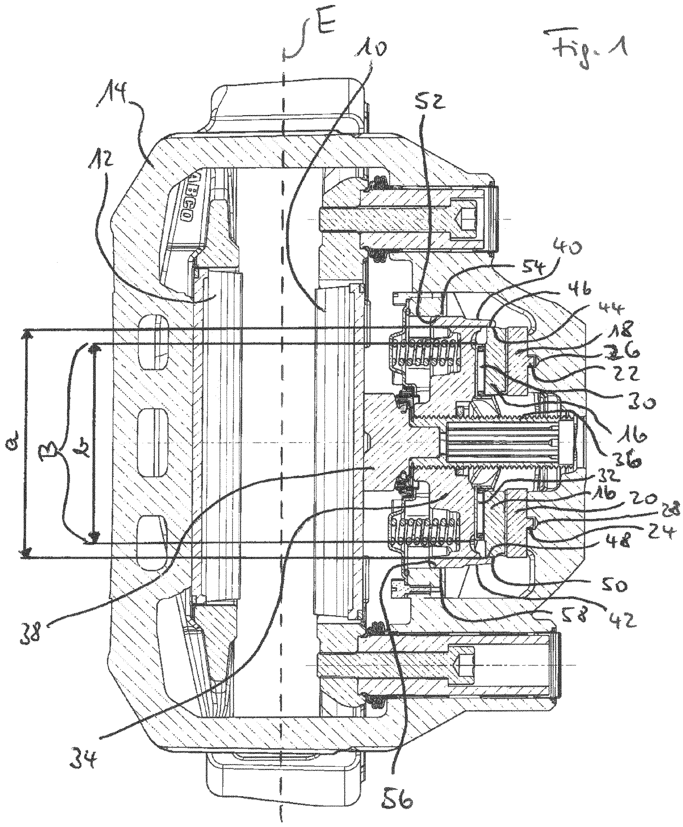

Wird die Bremswelle 16 verdreht, so tritt wegen ihrer exzentrischen Ausgestaltung eine Spreizung auf, durch die die Drehlager 30, 32, das Druckstück 34, die Nachstellschraube 36, der Druckstempel 38 und schließlich der zuspannseitige Bremsbelag in Figur 1 nach links gegen die Bremsscheibe gedrückt werden, wohingegen sich der Bremssattel 14 nach rechts bewegt und dadurch den felgenseitigen Bremsbelag 12 von der anderen Seite gegen die Bremsscheibe drückt.

Das Druckstück 34 weist einen ersten Ansatz 40 und einen zweiten Ansatz 42 auf. An dem ersten Ansatz 40 ist ein erster Anschlag 44 ausgebildet, der mit einem zweiten Anschlag 46 an der Bremswelle 16 derart zusammenwirkt, dass er eine Verschiebung der Bremswelle parallel zu ihrer Drehachse D in Figur 1 nach oben beschränkt.

In gleicher Weise ist an dem zweiten Ansatz 42 ein dritter Anschlag 48 ausgebildet, der mit einem vierten Anschlag 50 an der Bremswelle 16 derart zusammenwirkt, dass er ein Verschieben der Bremswelle 16 parallel zur Drehachse D in Figur 1 nach unten beschränkt. Zwischen dem ersten Anschlag 44 und dem zweiten Anschlag 46 bzw. zwischen dem dritten Anschlag 48 und dem vierten Anschlag 50 ist jeweils ein geringes Spiel vorgesehen, das zwar ein Verdrehen der Bremswelle 16 um die Drehachse D erlaubt, gleichzeitig aber die Bremswelle 16 in Richtung parallel zu der Drehachse D gegen Verschieben sichert.

Auch das Druckstück 34 ist in Richtung parallel zu der Drehachse D gegen Verschieben gesichert. Dazu dienen ein fünfter Anschlag 52, ein sechster Anschlag 54, ein siebter Anschlag 56 und ein achter Anschlag 58. Der fünfte Anschlag 52 und der siebte Anschlag 56 sind dabei an dem Bremssattel 14 ausgebildet oder unverschieblich dazu gehalten, während der sechste Anschlag 54 und der achte Anschlag 58 an dem Druckstück 34 ausgebildet sind, weshalb das Druckstück 34 in Richtung parallel zur Drehachse D zuverlässig gehalten ist. Wiederum gilt, dass ein Spiel zwischen dem fünften Anschlag 52 und dem sechsten Anschlag 54 bzw. zwischen dem siebten Anschlag 56 und dem achten Anschlag 58 derart beschaffen ist, dass zwar eine zuverlässige Verschiebesicherung gewährleistet ist, dennoch aber eine Bewegung des Druckstücks 34 in Rechts-Links-Richtung in Figur 1, also senkrecht zur Hauptebene E der Bremsscheibe gewährleistet ist.

Der fünfte und der sechste Anschlag 52, 54 stellen eine erste Beschränkungseinrichtung für die Verschieblichkeit des Druckstücks 34 dar. Das gleiche gilt für den siebten und den achten Anschlag 56, 58. Der erste Ansatz 40 mit dem ersten Anschlag 44 und der zweite Anschlag 46 stellen eine zweite Beschränkungseinrichtung für die Verschieblichkeit der Bremswelle 16 dar. Das gleiche gilt für den zweiten Ansatz 42 mit dem dritten Anschlag 48 und dem vierten Anschlag 50.

Da entsprechend den obigen Darlegungen das Druckstück 34 gegen ein Verschieben bezüglich des Bremssattels 14 in Richtung parallel zur Drehachse D gesichert ist und die Bremswelle 16 gegen ein Verschieben bezüglich des Druckstücks 34 parallel zur Drehachse D gesichert ist, ist insgesamt die Bremswelle 16 gegen ein Verschieben bezüglich des Bremssattels 14 in Richtung parallel zur Drehachse D gesichert, ohne dass es erforderlich wäre, im schwer zugänglichen inneren Bereich des Bremssattels 14 entsprechende Anschläge, Führungsleisten oder dergleichen anzubringen oder auszubilden, so dass die Herstellung der Bremse besonders einfach ist. Darüber hinaus können Verformungen des Bremssattels 14, die beim Zuspannen der Bremse im Bereich der Bremswelle 16 auftreten, die funktionelle Beweglichkeit der Bremswelle 16 nicht beeinträchtigen, weil in diesem Bereich keine Führungsleisten oder dergleichen vorhanden sind. Im Gegenteil: Die beim Zuspannen üblicherweile auftretenden Verformungen des Bremssattels 14 führen vielmehr zu einer Vergrößerung des Spiels zwischen dem fünften Anschlag 52 und dem sechsten Anschlag 54 bzw. zwischen dem siebten Anschlag 56 und dem achten Anschlag 58, so dass die Bremse besonders zuverlässig zugespannt werden kann.

Wie oben erläutert, wird die Zuspannkraft von der Bremswelle 16 über die Drehlager 30 und 32 in das Druckstück 34 eingeleitet. Die äußeren Ränder der Drehlager 30 und 32 stellen damit auch die Grenzen desjenigen Bereichs B dar, in den beim Bremsen eine von der Bremswelle 16 ausgehende Zuspannkraft in das Druckstück 34 eingeleitet wird. Der erste Ansatz 40 und der zweite Ansatz 42 liegen außerhalb des genannten Bereichs B, was erhebliche mechanische Vorteile mit sich bringt. Der Abstand a zwischen dem ersten Ansatz 40 und dem zweiten Ansatz 42 ist größer als der Abstand b der beiden genannten Außenränder der Drehlager 30, 32, die den genannten Bereich B der Zuspannkrafteinleitung begrenzen.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Scheibenbremse, insbesondere für Nutzfahrzeuge, mit
einer Bremsscheibe,
einer Bremswelle (16), deren Drehachse (D) parallel zu einer Hauptebene (E) der Bremsscheibe liegt,
einem Bremssattel (14), insbesondere einem Gleitsattel, an dem sich die Bremswelle (16) bei Betätigung über einen Gleitstein (18, 20) abstützt,
einem bezüglich der Bremsscheibe auf derselben Seite wie die Bremswelle liegenden Bremsbelag (10),
einem Druckstück (34) zwischen der Bremswelle und dem Bremsbelag,
einer ersten Beschränkungseinrichtung (52, 54; 56, 58), die die Verschieblichkeit des Druckstücks bezüglich der Bremsscheibe in Richtung parallel zur Drehachse der Bremswelle auf ein vorbestimmtes erstes Maß beschränkt und
einer zweiten Beschränkungseinrichtung (40, 44, 46; 42, 48, 50), die die Verschieblichkeit der Bremswelle bezüglich der Bremsscheibe in Richtung parallel zur Drehachse der Bremswelle auf ein vorbestimmtes zweites Maß beschränkt, wobei
die Bremswelle bei Betätigung das Druckstück und damit den Bremsbelag gegen die Bremsscheibe drückt,
die zweite Beschränkungseinrichtung (40, 44, 46; 42, 48, 50) einen ersten Anschlag (44) an dem Druckstück (34) und einen mit dem ersten Anschlag im Sinne eines Beschränkens der Verschieblichkeit zusammenwirkenden zweiten Anschlag (46) an der Bremswelle (16) aufweist,
eine dritte Beschränkungseinrichtung (22, 24; 26, 28) vorgesehen ist, die die Verschieblichkeit des Gleitsteins (18, 20) bezüglich der Bremsscheibe in mindestens einer parallel zur Hauptebene (E) der Bremsscheibe liegenden Richtung auf ein vorbestimmtes drittes Maß beschränkt und
die dritte Beschränkungseinrichtung (22, 24; 26, 28) einen Vorsprung (22; 24) aufweist, der in montiertem Zustand in eine Ausnehmung (26; 28) hineinragt,
**dadurch gekennzeichnet, dass**
die Ausnehmung (26; 28) ein Sackloch ist.

2. Scheibenbremse nach Anspruch 1, **dadurch gekennzeichnet, dass** der erste Anschlag (44) außerhalb desjenigen Bereichs (B) liegt, in dem beim Bremsen eine von der Bremswelle (16) ausgehende Zuspannkraft in das Druckstück (34) eingeleitet wird.

3. Scheibenbremse nach Anspruch 1 oder 2, **dadurch gekennzeichnet, dass** die zweite Beschränkungseinrichtung (40, 44, 46; 42, 48, 50) einen, zwei oder mehr Ansätze (40, 42) an dem Druckstück (34) aufweist.

4. Scheibenbremse nach Anspruch 3, **dadurch gekennzeichnet, dass** im Falle von zwei Ansätzen (40, 42) der Abstand (a) der beiden Ansätze voneinander größer ist als der in Richtung parallel zur Drehachse (D) der Bremswelle (10) gemessene Abstand (b) der äußeren Ränder desjenigen Bereichs (B), in dem beim Bremsen eine von der Bremswelle ausgehende Zuspannkraft in das Druckstück (34) eingeleitet wird.

## Claims

1. Disc brake, in particular for utility vehicles, comprising
a brake disc,
a brake shaft (16), of which the axis of rotation (D) is located parallel to a main plane (E) of the brake disc,
a brake caliper (14), in particular a sliding caliper, on which the brake shaft (16) is supported when actuated via a sliding block (18, 20),
a brake pad (10), located on the same side as the brake shaft with respect to the brake disc,
a pressure piece (34) between the brake shaft and the brake pad,
a first restricting device (52, 54; 56, 58), which restricts the displaceability of the pressure piece with respect to the brake disc in the direction parallel to the axis of rotation of the brake shaft to a predetermined first dimension, and
a second restricting device (40, 44, 46; 42, 48, 50), which restricts the displaceability of the brake shaft with respect to the brake disc in the direction parallel to the axis of rotation of the brake shaft to a predetermined second dimension, wherein
the brake shaft, when actuated, presses the pressure piece and therefore the brake pad against the brake disc,
the second restricting device (40, 44, 46; 42, 48, 50) has a first stop (44) on the pressure piece (34) and a second stop (46) on the brake shaft (16), which interacts with the first stop with the effect of restricting the displaceability,
a third restricting device (22, 24; 26, 28) is provided, which restricts the displaceability of the sliding block (18, 20) with respect to the brake disc in at least one direction located parallel to the main plane (E) of the brake disc to a predetermined third dimension, and
the third restricting device (22, 24; 26, 28) has a projection (22, 24) which, when assembled, projects into a recess (26; 28),
**characterized in that**
the recess (26; 28) is a blind hole.

2. Disc brake according to Claim 1, **characterized in that** the first stop (44) is located outside the region (B) in which, during braking, an application force originating from the brake shaft (16) is introduced into the pressure piece (34).

3. Disc brake according to Claim 1 or 2, **characterized in that** the second restricting device (40, 44, 46; 42, 48, 50) has one, two or more projections (40, 42) on the pressure piece (34).

4. Disc brake according to Claim 3, **characterized in that** in the case of two projections (40, 42), the distance (a) of the two projections from each other is greater than the distance (b), measured in the direction parallel to the axis of rotation (D) of the break shaft (10), of the outer edges of those regions (B) in which, during braking, an application force originating from the brake shaft is introduced into the pressure piece (34).

## Revendications

1. Frein à disque, destiné en particulier à des véhicules utilitaires, le frein à disque comprenant
un disque de frein,
un arbre de frein (16) dont l'axe de rotation (D) est parallèle à un plan principal (E) du disque de frein,
un étrier de frein (14), en particulier un étrier coulissant, sur lequel s'appuie l'arbre de frein (16) lorsqu'il est actionné par un coulisseau (18, 20),
une garniture de frein (10) située, par rapport au disque de frein, du même côté que l'arbre de frein,
une pièce de pression (34) située entre l'arbre de frein et la garniture de frein,
un premier moyen de limitation (52, 54 ; 56, 58) limitant la capacité de coulissement de la pièce de pression, par rapport au disque de frein dans la direction parallèle à l'axe de rotation de l'arbre de frein, à une première valeur prédéterminée et
un deuxième moyen de limitation (40, 44, 46 ; 42, 48, 50) limitant la capacité de coulissement de l'arbre de frein, par rapport au disque de frein dans une direction parallèle à l'axe de rotation de l'arbre de frein, à une deuxième valeur prédéterminée
l'arbre de frein pressant la pièce de pression et donc la garniture de frein contre le disque de frein lors de l'actionnement,
le deuxième moyen de limitation (40, 44, 46 ; 42, 48, 50) comportant, au niveau de la pièce de pression (34), une première butée (44) et, au niveau de l'arbre de frein (16), une deuxième butée (46) qui coopère avec la première butée pour limiter la capacité de coulissement,
un troisième moyen de limitation (22, 24 ; 26, 28) étant prévu qui limite la capacité de coulissement du coulisseau (18, 20), par rapport au disque de frein dans au moins une direction parallèle au plan principal (E) du disque de frein, à une troisième valeur prédéterminée et
le troisième moyen de limitation (22, 24 ; 26, 28) comportant une saillie (22 ; 24) qui, à l'état monté, fait saillie dans un évidement (26 ; 28),
**caractérisé en ce que**
l'évidement (26 ; 28) est un trou borgne.

2. Frein à disque selon la revendication 1, **caractérisé en ce que** la première butée (44) est située à l'extérieur de la région (B) dans laquelle la force de serrage exercée par l'arbre de freinage (16) est injectée dans la pièce de pression (34) lors du freinage.

3. Frein à disque selon la revendication 1 ou 2, **caractérisé en ce que** les deuxièmes moyens de limitation (40, 44, 46; 42, 48, 50) comportent au moins une saillie (40, 42) au niveau de la pièce de pression (34).

4. Frein à disque selon la revendication 3, **caractérisé en ce que**, dans le cas de deux saillies (40, 42), la distance (a) entre les deux saillies est supérieure à la distance (b), mesurée dans la direction parallèle à l'axe de rotation (D) de l'arbre de frein (10), entre les bords extérieurs de la zone (B) dans laquelle la force de freinage exercée par l'arbre de frein est introduite dans la pièce de pression (34) lors du freinage.
